# FASCICULE DE BREVET EUROPEEN

(11) **EP 0 448 442 B1**
(45) Date de publication et mention de la délivrance du brevet: **22.09.1993**
(21) Numéro de dépôt: 91400655.6
(22) Date de dépôt: 08.03.1991
(51) Int. Cl.: A01B 61/04

(54) **Perfectionnement aux charrues réversibles à sécurité, contre les pierres et surcharges, montée sur chaque demi-corps**
Verbesserung an Drehpflügen, mit einer an jedem Halbkörper angeordneten Sicherung gegen Steine und Überlastung
Improvement to reversible ploughs, with a protection, mounted on each half body, against stones and overloading

(30) Priorité: 16.03.1990 FR 9003578
(43) Date de publication de la demande: 25.09.1991
(73) Titulaire: CHARRUES NAUD, 49600 Andreze (FR)
(72) Inventeur: Naud, Bernard, F-49600 Andreze (FR)
(74) Mandataire: Phélip, Bruno

(56) Documents cités:
- US-A- 2 913 059
- US-A- 3 517 748
- US-A- 3 985 187
- US-A- 4 519 461

## Description

La présente invention concerne un perfectionnement aux charrues réversibles du type comportant un système de sécurité à l'encontre des pierres et des surcharges.

L'invention concerne plus particulièrement les charrues réversibles du type comportant des corps de labour montés sur un bâti, lesquels corps sont constitués de deux demi-corps composés chacun d'un étançon muni d'un soc et d'un versoir. Ces demi-corps sont disposés symétriquement par rapport au bâti, de part et d'autre du plan médian de ce dernier.

Chaque étançon est solidaire du bâti au moyen d'un dispositif de sécurité qui permet un escamotage du soc en cas de rencontre de pierres ou de surcharges mettant en danger l'intégrité de la charrue.

Ce dispositif de sécurité, dans le cas de la charrue selon l'invention, se situe sur le bâti, à proximité du plan médian et il comprend un axe d'articulation qui permet le pivotement de l'étançon par rapport au bâti et un organe de sécurité qui libère l'étançon en cas de rencontre avec une pierre ou en cas de surcharge. Cet organe de sécurité peut être du type boulon cisaillable.

L'axe d'articulation de l'étançon sur le bâti, se situe généralement dans un plan perpendiculaire au sens d'avancement de la charrue et il est, le plus souvent, parallèle au plan médian de ladite charrue. Cet axe d'articulation se situe en tête de l'étançon, vers l'arrière, pour permettre un basculement et dégagement vers l'arrière du demi-corps. L'organe de sécurité se situe en avant de l'axe d'articulation, sur la tête de l'étançon. S'il s'agit d'un boulon, son axe est parallèle à celui de l'axe d'articulation de l'étançon.

Cette disposition constructive du dispositif de sécurité, qui permet la solidarisation de l'étançon sur le bâti, procure une sécurité franche, de bonne efficacité, liée notamment au bras de levier important entre la pointe du soc et l'axe d'articulation, lequel bras de levier facilite le cisaillement de l'organe de sécurité, sans faille.

Les corps de labour sont équipés de versoirs dont les dimensions sont variables selon le travail recherché mais aussi selon la nature du terrain à labourer.

Lorsque l'on veut des raies bien marquées, il est nécessaire d'employer des versoirs hélicoïdaux de grande longueur. Dans ce cas, lorsque le système de sécurité fonctionne, il y a interférence entre les versoirs d'un même corps : entre le versoir du demi-corps qui s'escamote et le versoir du demi-corps situé au-dessus. Cet incident provoque une détérioration des deux versoirs d'un même corps et bien souvent une détérioration globale du corps si ce n'est de la charrue toute entière (voir US-A-2913059).

La présente invention a pour but de remédier à cet inconvénient, sans altérer l'efficacité de ce type de sécurité contre les pierres et les surcharges.

Pour éviter ce phénomène d'interférence entre les versoirs, la charrue selon l'invention comporte, entre les étançons et le bâti, des axes d'articulation centrés sur des lignes qui coupent le plan médian de la charrue, au lieu d'être parallèles à ce plan médian ; l'intersection entre l'axe d'articulation et le plan médian se situant au dos des socs et versoirs, c'est-à-dire à l'opposé de la surface active des corps.

Selon une disposition préférentielle de l'invention, les lignes des axes d'articulation des étançons d'un même corps, sont concourantes et sécantes sur le plan de symétrie de la charrue ; elles sont perpendiculaires à l'axe longitudinal de la charrue ou à son sens d'avancement, ou lègèrement inclinées par rapport à cet axe.

Toujours selon l'invention, les lignes des axes d'articulation des étançons d'un même corps, font, entre elles, un angle compris entre 10 et 35° selon le dégagement souhaité pour le corps, en fonction des dimensions de ce dernier.

Selon une disposition constructive de l'invention, l'axe d'articulation de chaque demi-corps, est monté dans une chape solidaire du bâti et incliné par rapport au plan médian du bâti.

Toujours selon l'invention, la tête de l'étançon est coudée par rapport au reste de la longueur de ce dernier, et elle s'articule dans la chape fixée sur le bâti.

L'invention sera encore illustrée à l'aide de la description suivante et des dessins annexés, donnés à titre indicatif et dans lesquels :
- la figure 1 illustre, de façon schématique, un corps de charrue réversible selon l'invention, avec représentation, en traits mixtes fins, d'un demi-corps dans deux positions escamotées ;
- la figure 2 représente, de façon schématique, une vue de l'arrière, du corps de la figure 1 ;
- la figure 3 est une vue de dessus, sans les corps de labour, montrant les moyens de liaison de ce corps sur le bâti de la charrue.

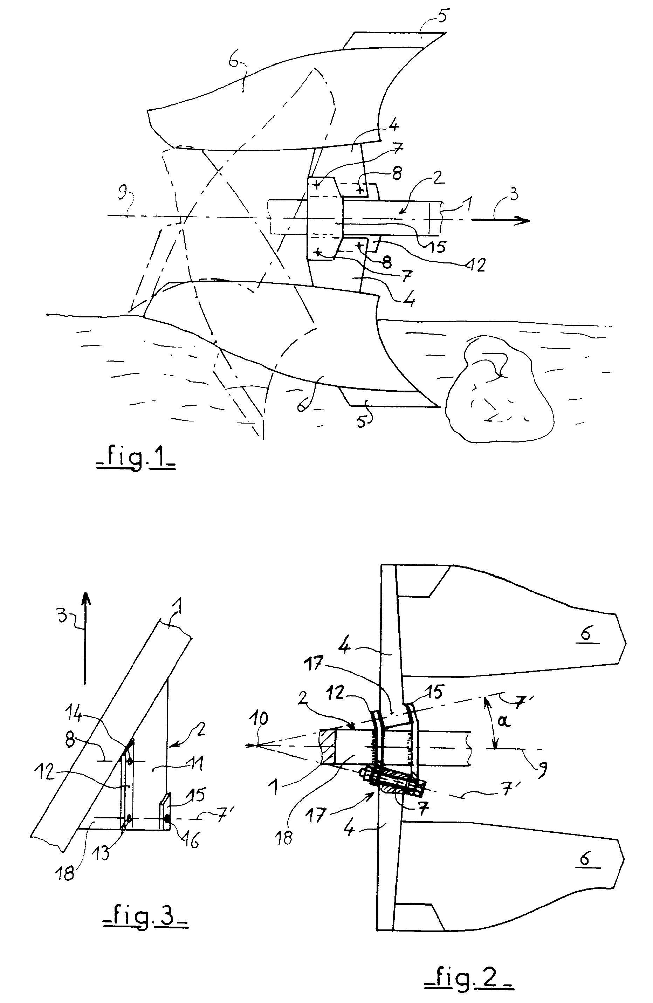

On a représenté, figure 1, un corps de labour monté sur un bâti 1. Ce corps de labour est solidaire du bâti 1 par une structure intermédiaire 2 qui le positionne selon le sens d'avancement représenté par la flèche 3, figure 3. Le bâti 1, ou âge, est généralement incliné par rapport au sens d'avancement de la charrue.

On a représenté, sur les figures, une portion de la charrue, laquelle charrue peut être du type à plusieurs corps, portée ou non ; elle est solidaire d'un tracteur, non représenté, au moyen d'une tête d'attelage classique qui permet son retournement, de façon classique également.

Le corps de labour, figure 1, comprend deux demi-corps, chacun composé d'un étançon 4 sur lequel sont montés un soc 5 et un versoir 6. Chaque étançon 4 est solidaire du bâti 1 et en particulier de sa structure de liaison 2, au travers d'un dispositif de sécurité qui permet l'escamotage du demi-corps, lors de la rencontre d'un obstacle, tel qu'une pierre comme représenté figure 1, ou en cas de surcharge. Ce dispositif de sécurité est constitué d'un axe d'articulation 7 qui permet le basculement de l'étançon 4 vers l'arrière, et d'un organe de sécurité 8 du type boulon cisaillable.

L'axe d'articulation 7 est disposé en tête de l'étançon 4, à proximité du plan médian 9 de la charrue et dans la partie arrière de ladite tête de l'étançon. L'organe de sécurité 8 est également disposé dans la tête de l'étançon 4, à proximité du plan médian 9, en avant de l'axe d'articulation 7, à une distance appropriée.

On remarque, figure 1, que pour chaque corps, on dispose de deux axes d'articulation 7 et de deux organes de sécurité 8 disposés symétriquement par rapport au plan médian 9 du bâti.

On a représenté, figure 2, le corps de labour vu de l'arrière de la charrue. Ce corps est symétrique de part et d'autre du plan médian 9 de la charrue et du bâti 1. Il est solidaire du bâti 1 par l'intermédiaire de la structure de liaison 2. Chaque étançon 4 est fixé sur la structure 2 au moyen d'un axe d'articulation 7. Chaque axe 7 est centré sur une ligne d'axe fictif 7' qui fait un angle a avec le plan médian 9. Le point d'intersection de chaque axe 7' avec le plan médian 9, se situe dans le dos des socs et versoirs des corps de labour, c'est-à-dire du côté opposé aux surfaces actives de ces socs 5 et versoirs 6. Ces axes 7' sont de préférence perpendiculaires au sens d'avancement ou à l'axe longitudinal de la charrue. Ils peuvent également être légèrement inclinés par rapport à la normale mais c'est surtout l'inclinaison par rapport au plan médian qui permet d'éviter l'interférence des versoirs 6.

On remarque, figure 2, que les axes 7' des deux étançons 4 d'un même corps, sont sécants en un point 10 situé sur le plan médian 9 de la charrue. L'angle entre les deux axes 7' est compris entre 10 et 35° environ ; cet angle est essentiellement fonction des dimensions des versoirs.

La structure de liaison 2 est représentée, vue de dessus, sans le corps de labour, figure 3. Cette structure de liaison réalise un déport latéral du corps de labour, par rapport au bâti, pour permettre le pivotement vers l'arrière, de chaque demi-corps, autour de son axe d'articulation 7, sans être limitée par ledit bâti.

Cette structure de liaison 2 est constituée d'un bras 11 qui s'étend parallèlement au sens d'avancement de la charrue et qui est fixé sur le côté du bâti 1. Ce bras comporte une première plaque 12 qui s'étend longitudinalement, sensiblement parallèle au sens d'avancement de la charrue. Les extrémités de cette plaque 12, situées de part et d'autre du plan médian 9, sont inclinées vers le bâti, d'un angle a par rapport à la partie centrale de ladite plaque, et on remarque, sur ces parties inclinées, figure 3, un orifice 13 situé à l'arrière, correspondant au passage de l'axe d'articulation 7 et un orifice 14, situé à l'avant, correspondant au passage de l'organe de sécurité 8.

Une deuxième plaque 15 est fixée à l'extérieur du bras 11. Ses extrémités, situées de part et d'autre du plan médian 9, sont inclinées pour être parallèles aux extrémités correspondantes de la plaque 12. Ces extrémités comportent un orifice 16 situé sur l'axe 7', c'est-à-dire en vis à vis de l'orifice 13 de la plaque 12.

Les plaques 12 et 15 forment deux chapes pour recevoir les têtes 17 des étançons 4, de chaque demi-corps situé de part et d'autre du plan médian 9 de la charrue.

On remarque encore, interposé entre la plaque 12 et le bâti 1, figure 3, un caisson triangulaire 18 qui sert de renfort à la structure de déport 2.

L'étançon 4 est en forme de caisson allongé, il est sensiblement perpendiculaire au plan médian 9 de la charrue. Sa tête 17 est coudée par rapport au reste de sa longueur et s'articule dans la chape formée par les plaques 12 et 15.

On a représenté, figure 2, en coupe partielle, l'axe d'articulation 7, constitué d'un boulon maintenu dans les orifices 13 et 16 des plaques 12 et 15 respectivement. Les plaques 12 et 15 sont fixées à l'extrémité arrière du bras 11.

On a illustré, en traits mixtes fins, figure 1, deux positions du demi-corps de labour inférieur. Lorsque le soc 5 de ce demi-corps inférieur rencontre un obstacle, il y a rupture de l'organe de sécurité 8 et basculement du demi-corps autour de son axe d'articulation 7. Le versoir 6 remonte fortement vers l'arrière et, très vite, son extrémité atteint le niveau du versoir du demi-corps supérieur. Grâce à l'inclinaison de l'axe d'articulation 7, le versoir passe devant le versoir du demi-corps supérieur 6 et permet un escamotage sans limitation du demi-corps inférieur, sans être limité notamment par le demi-corps supérieur.

Après passage de l'obstacle, le demi-corps est remis en position par l'opérateur ainsi qu'un nouvel organe de sécurité 8.

## Revendications

1. Charrue réversible comprenant au moins un corps de labour constitué de deux étançons (4) avec socs (5) et versoirs (6) ; ces étançons (4) sont disposés symétriquement par rapport au bâti (1) de la charrue, de part et d'autre de son plan médian (9), et sont solidaires dudit bâti au moyen d'un dispositif de sécurité situé à proximité du plan médian (9), lequel dispositif de sécurité comporte, entre le bâti et l'étançon, d'une part, un axe d'articulation (7) centré sur un axe fictif (7') et, d'autre part, un organe de sécurité (8), caractérisée en ce que les axes fictifs (7') des étançons (4) sont tels qu'ils coupent le plan médian (9) de la charrue au dos des socs et versoirs, c'est-à-dire du côté opposé aux surfaces actives de ces socs et versoirs, pour éviter toute interférence entre les versoirs (6) d'un même corps, lors du fonctionnement du dispositif de sécurité.

2. Charrue réversible selon la revendication 1, caractérisée en ce que, pour un même corps, les axes fictifs (7') des étançons (4), sont concourants et sécants en un point (10) situé sur le plan médian (9) de la charrue.

3. Charrue réversible selon la revendication 1, caractérisée en ce que les axes fictifs (7') des étançons (4) font, entre eux, un angle compris entre 10 et 35°.

4. Charrue réversible selon l'une quelconque des revendications 1 à 3, caractérisée en ce qu'elle comporte, pour chaque demi-corps un axe d'articulation (7) monté dans une chape solidaire du bâti (1), et incliné par rapport au plan médian (9) dudit bâti.

5. Charrue réversible selon la revendication 4, caractérisée en ce qu'elle comporte au moins un étançon (4) dont la tête (17) est coudée par rapport au reste de la longueur dudit étançon, et s'articule dans une chape fixée sur le bâti (1).

6. Charrue réversible selon la revendication 4, caractérisée en ce qu'elle comporte, fixée latéralement sur le bâti (1), une structure de liaison (2) sur laquelle sont fixés les demi-corps, laquelle structure est constituée d'un bras (11) qui reçoit, à son extrémité arrière, deux plaques (12 et 15) formant une chape de réception des têtes (17) des étançons (4).

7. Charrue réversible selon la revendication 6, caractérisée en ce qu'elle comporte, fixée sur le bras (11), une plaque (12) dont les extrémités, de part et d'autre du plan médian (9), sont inclinées et comportent deux orifices (13 et 14) pour, respectivement, recevoir, l'axe d'articulation (7) et l'organe de sécurité (8).

## Patentansprüche

1. Drehpflug mit mindestens einem Pflugkörper, der aus zwei Stegen (4) mit Scharen (5) und Streichblechen (6) besteht, wobei die Stege (4) symmetrisch in bezug auf den Pflugrahmen (1) beiderseits von dessen Mittelebene (9) angeordnet und mit dem genannten Rahmen mittels einer Sicherungsvorrichtung fest verbunden sind, die in Nähe der Mittelebene (9) angeordnet ist, wobei die Sicherungsvorrichtung zwischen dem Rahmen und dem Steg einerseits eine Schwenkachse (7), die auf einer fiktiven Achse (7') zentriert ist, und andererseits ein Sicherungsorgan (8) aufweist, dadurch gekennzeichnet, daß die fiktiven Achsen (7') der Stege (4) so gelegt sind, daß sie die Mittelebene (9) des Pfluges im Rücken der Schare und Streichbleche, also auf der Seite schneiden, die den aktiven Flächen dieser Schare und Streichbleche gegenüberliegt, um jedwedes Zusammentreffen der Streichbleche (6) eines selben Körpers zu verhindern, wenn die Sicherungsvorrichtung in Funktion tritt.

2. Drehpflug nach Anspruch 1, dadurch gekennzeichnet, daß bei einem selben Körper die fiktiven Achsen (7') der Stege zusammenlaufen und sich in einem Punkt (10) schneiden, der auf der Mittelebene (9) des Pfluges liegt.

3. Drehpflug nach Anspruch 1, dadurch gekennzeichnet, daß die fiktiven Achsen (7') der Stege (4) zwischen sich einen Winkel einschließen, der zwischen 10 und 35° liegt.

4. Drehpflug nach einem der Ansprüche 1 bis 3, dadurch gekennzeichnet, daß er für jeden Halbkörper eine Schwenkachse (7) aufweist, die in einem mit dem Rahmen (1) verbundenen Gehäuse eingebaut ist und in bezug auf die Mittelebene (9) des erwähnten Rahmens geneigt verläuft.

5. Drehpflug nach Anspruch 4, dadurch gekennzeichnet, daß er zumindest einen Steg (4) aufweist, dessen Kopf (17) in bezug auf die restliche Länge des genannten Steges abgekröpft ist und in einem an dem Rahmen (1) befestigten Gehäuse schwenkbeweglich ist.

6. Drehpflug nach Anspruch 4, dadurch gekennzeichnet, daß er einen seitlich am Rahmen (1) befestigten Verbindungsaufbau (2) aufweist, an dem die Halbkörper befestigt sind, wobei der Aufbau durch einen Arm (11) gebildet ist, der an seinem hinteren Ende zwei Platten (12 und 15) aufnimmt, die ein Gehäuse für die Aufnahme der Köpfe (17) der Stege (4) bilden.

7. Drehpflug nach Anspruch 6, dadurch gekennzeichnet, daß er eine am Arm (11) befestigte Platte (12) aufweist, deren Enden beiderseits der Mittelebene (9) schräggestellt sind und zwei Öffnungen (13 und 14) haben, die jeweils die Schwenkachse (7) und das Sicherungsorgan (8) aufnehmen.

## Claims

1. Reversible plough comprising at least one tilling body made up of two shanks (4) with ploughshares (5) and mouldboards (6); these shanks (4) being arranged symmetrically with respect to the framework (1) of the plough, on either side of its median plane (9), and being rigidly locked to the said framework by means of a safety device located in the neighbourhood of the median plane (9), said safety device comprising, between the framework and the shank, on the one hand, an axis of articulation (7) centered on an imaginary axis (7') and, on the other hand, a safety device (8), characterized in that the imaginary axes (7') of the shanks (4) are such that they intersect the median plane (9) of the plough behind the ploughshares and mouldboards, i.e. on the side opposite the working surfaces of these ploughshares and mouldboards, to avoid any interference between the mouldboards of a given body when the said safety device is in operation.

2. Reversible plough according to claim 1, characterized in that, for a given body, the imaginary axes (7') of the shanks (4), converge and intersect at a point (10) located on the median plane (9) of the plough.

3. Reversible plough according to claim 1, characterized in that the imaginary axes (7') of the shanks (4) form, between them, an angle included between 10° and 35°.

4. Reversible plough according to any one of claims 1 to 3, characterized in that it comprises, for each half-body, an axis of articulation (7) mounted in a fork integral with the framework (1), and inclined with respect to the median plane (9) of the said framework.

5. Reversible plough according to claim 4, characterized in that it comprises at least one shank (4) whose head (17) is cranked with respect to the rest of the length of the said shank, and articulates in a fork fixed on the framework (1).

6. Reversible plough according to claim 4, characterized in that it comprises, laterally fixed on the framework (1), a connecting structure (2) on which the half-bodies are fixed, said structure being made up of an arm (11) which receives, on its back end, two plates (12 and 15) forming a fork for receiving the heads (17) of the shanks (4).

7. Reversible plough according to claim 6, characterized in that it comprises, fixed on the arm (11), a plate (12) whose ends, on each side of the median plane (9), are inclined and comprise two orifices (13 and 14) for, respectively, receiving, the axis of articulation (7) and the safety device (8).
